# FASCICULE DE BREVET EUROPEEN

(11) **EP 1 519 885 B1**
(45) Date de publication et mention de la délivrance du brevet: **12.12.2007**
(21) Numéro de dépôt: 03748196.7
(22) Date de dépôt: 02.07.2003
(51) Int. Cl.: B65G 17/08

(54) **TAPIS DE CONVOYAGE**
FÖRDERMATTE
CONVEYOR BELT

(30) Priorité: 05.07.2002 FR 0208468
(43) Date de publication de la demande: 06.04.2005
(73) Titulaire: GEBO INDUSTRIES (SOCIETE ANONYME), 67116 Reichstett (FR)
(72) Inventeur: PETROVIC, Zmaj, 67450 Mundolsheim (FR)
(74) Mandataire: Rhein, Alain
(86) Numéro de dépôt international: PCT/FR2003/002060
(87) Numéro de publication internationale: WO 2004/007320

(56) Documents cités:
- EP-A- 0 521 506
- EP-A- 0 878 418
- WO-A-98/06648
- WO-A-99/65801
- US-A- 5 921 379

## Description

L'invention concerne un tapis de convoyage plan prévu apte à emprunter des trajectoires courbes et composé d'une pluralité de maillons comportant, disposée en quinconce, à l'avant et à l'arrière d'une âme centrale, une succession de créneaux comportant, chacun, une ouverture pour le passage d'un axe d'articulation transversal assurant la liaison entre deux maillons successifs, au moins les ouvertures des créneaux à l'avant ou ceux à l'arrière étant définies de forme oblongue de manière à assurer un jeu dans une direction longitudinale d'un maillon par rapport à un autre adjacent.

La présente invention concerne le domaine du convoyage d'objets quelconques, par exemple de récipients ou autres.

A ce propos, dans ce domaine du convoyage de récipients tels que des bouteilles, les convoyeurs les plus fréquemment utilisés pour assurer leur transport au travers d'une unité d'embouteillage comportent des chaînes à palettes décrivant des circuits bouclés et sur le brin supérieur desquels repose, précisément, le fond de ces bouteilles.

Plusieurs de ces chaînes à palettes peuvent être juxtaposées pour former un plan de convoyage.

Evidemment, la faible largeur des palettes composant ces chaînes leur permet d'emprunter des trajectoires courbes. Ce type de chaîne à palettes, réalisé, usuellement, en acier inoxydable, s'avère d'un coût de revient particulièrement élevé, tenant compte, en outre, que leur entraînement doit être, souvent, individualisé.

Par ailleurs, le différentiel de vitesse entre une chaîne à l'intérieur de la courbe et celle située à l'extérieur conduit à un déplacement relatif des récipients entre eux au cours de leur transport d'une unité de traitement en direction d'une autre. Ceci n'est pas toujours souhaitable, en particulier, lorsqu'il y a lieu de véhiculer des récipients peu stables.

L'on a, par conséquent, imaginé des tapis de convoyage capables d'emprunter, dans un plan horizontal, des trajectoires courbes tout en étant constitués de maillons articulés les uns par rapport aux autres s'étendant sur toute la largeur d'un convoyeur.

Plus particulièrement un tel maillon comporte, à l'avant et à l'arrière d'une âme centrale et disposée en quinconce, une succession de créneaux traversés d'une ouverture pour le passage d'un axe d'articulation assurant la liaison de deux maillons successifs.

Au moins les ouvertures des créneaux à l'avant ou ceux à l'arrière sont définies de forme oblongue pour conférer à ces maillons une mobilité longitudinale les uns par rapport aux autres. Cela permet à ces maillons de rapprocher les uns des autres du côté interne à un virage emprunté par le tapis de convoyage.

Dans ces conditions l'on comprend, d'ailleurs, que si sur les portions rectilignes empruntées par ce tapis, la traction qui lui est imprimée par des moyens d'entraînement appropriés s'exerce d'un maillon sur l'autre sur toute leur longueur, dans les portions courbes cette force de traction ne peut se répercuter d'un maillon sur le suivant qu'au travers de leurs créneaux se situant en extérieur de virage.

Evidemment, le fait que cette force de traction vienne se concentrer en bordure extérieure du tapis de convoyage pour, ainsi dire, ne se répercuter d'un maillon à un autre qu'au travers d'un seul de leurs créneaux, rend ce tapis particulièrement fragile. En somme, la largeur d'un tel tapis de convoyage est nécessairement limitée. De plus, ils ne peuvent emprunter un virage de plus de 90°.

Pour améliorer la situation l'on a bien envisagé certaines solutions. La première a consisté à adjoindre aux extrémités de chaque maillon un module renforcé. En particulier, si les maillons sont réalisés, habituellement, en matière plastique, les modules de renfort venant les compléter à leurs extrémités sont eux conçus en métal. En fait, cette solution ne répond pas complètement au problème posé et l'augmentation du poids du tapis au travers de ces modules complémentaires métalliques, par ailleurs onéreux, le rend peu satisfaisant.

Dans le cadre du document WO-98/06648 l'on a encore pensé donner à l'axe d'articulation reliant deux maillons successifs une forme conique dans ses parties d'extrémités. Là encore, on ne répond pas au problème posé, puisque cette conicité, correspondant forcément à une donnée figée, ne peut convenir qu'à un rayon de courbure bien défini, par exemple, le rayon de courbure maximal que peut emprunter le tapis. Selon une autre solution, voir document US 5 921 379, les ouvertures oblongues dans ces créneaux des maillons suivent une ligne formant un angle au milieu des maillons.

Il est évident, par conséquent, que pour des rayons de courbure plus faibles, la retransmission de la force de traction intervient d'un maillon sur l'autre, en un point précis sur leur longueur transversale à l'axe du tapis.

En somme, cette retransmission de la force de traction s'effectue de manière localisée par l'intermédiaire d'un, voire deux des créneaux de ces maillons.

Dans le cadre d'une première démarche inventive, l'on a pensé à reposer le problème et dans ce contexte l'on a pu constater que, dans 90 % des installations de convoyage, telles que des unités d'embouteillage, le tapis d'un convoyeur n'est amené à emprunter des trajectoires courbes que dans une seule direction, soit à gauche ou à droite, par rapport au sens de progression de ce tapis.

Aussi, pour ces 90% des installations l'on a pensé qu'il pouvait être avantageux de trouver une solution permettant de résoudre le problème en améliorant la répartition des contraintes, à souhait, d'un et/ou l'autre des côtés du tapis de convoyage, soit le côté venant se situer extérieurement à la trajectoire qu'il est prévu de faire emprunter à ce tapis.

A noter, cependant, que le renforcement selon l'invention peut intervenir sur chacun des côtés latéraux du tapis, soit à chacune des extrémités des maillons qui le composent.

Dans une seconde démarche inventive, l'on a pensé qu'en particulier du côté externe à une trajectoire courbe, le tapis de convoyage s'adapte à une telle trajectoire, non pas au travers d'une mobilité relative des maillons entre eux, mais grâce à une modularité de chacun de ces maillons.

En somme, si les maillons sont normalement mobiles entre eux grâce aux ouvertures oblongues ménagées dans leurs créneaux traversés par un axe d'articulation, l'on a pensé plutôt adapter la largeur de ces maillons, tout particulièrement, dans leur partie extérieure à la courbure, au rayon de cette dernière.

A cet effet, l'invention concerne un tapis de convoyage plan prévu apte à emprunter des trajectoires courbes et composé d'une pluralité de maillons comportant, disposée en quinconce, à l'avant et à l'arrière d'une âme centrale, une succession de créneaux comportant, chacun, une ouverture pour le passage d'un axe d'articulation transversale assurant la liaison entre deux maillons successifs, au moins les ouvertures des créneaux à l'avant ou ceux à l'arrière étant définies de forme oblongue de manière à assurer un jeu dans une direction longitudinale d'un maillon par rapport à un autre adjacent, caractérisé par le fait qu'au moins du côté externe à la trajectoire courbe destinée à être empruntée par le tapis de convoyage, au moins certains des maillons comportent, dans leur prolongement transversal, un module de maillon comportant, disposé en quinconce à l'avant et à l'arrière d'une âme centrale, des créneaux pourvus d'une ouverture oblongue se terminant au moins du côté extérieur, le plus éloigné du plan médian du module de maillon, par un secteur semi-circulaire, dont le centre se situe sur un axe de forme convexe d'un rayon de courbure important, supérieur à un mètre, vue par rapport audit plan médian.

Dans le cadre de la même idée inventive, l'invention concerne également un tapis de convoyage plan prévu apte à emprunter des trajectoires courbes et composé d'une pluralité de maillons comportant, disposée en quinconce, à l'avant et à l'arrière d'une âme centrale, une succession de créneaux comportant, chacun, une ouverture pour le passage d'un axe d'articulation transversale assurant la liaison entre deux maillons successifs, au moins les ouvertures des créneaux à l'avant ou ceux à l'arrière étant définies de forme oblongue de manière à assurer un jeu dans une direction longitudinale d'un maillon par rapport à un autre adjacent, caractérisé par le fait qu'au moins du côté externe à la trajectoire courbe destinée à être empruntée par le tapis de convoyage, au moins certains des maillons comportent, dans leur prolongement transversal, un module de maillon composé d'au moins deux maillons intermédiaires comportant, disposé en quinconce à l'avant et à l'arrière d'une âme centrale, des créneaux, ceux à l'avant, respectivement à l'arrière du maillon intermédiaire avant, respectivement arrière, étant pourvus d'une ouverture ajustée à la section cylindrique de l'axe d'articulation qui les traverse, tandis que les créneaux à l'arrière, respectivement à l'avant, du maillon intermédiaire avant, respectivement arrière, étant pourvus d'une ouverture oblongue se terminant au moins du côté extérieur, le plus éloigné du plan médian du maillon intermédiaire correspondant, par un secteur semi-circulaire, dont le centre se situe sur un axe de forme convexe d'un rayon de courbure important, supérieur à un mètre, vue par rapport audit plan médian, ces ouvertures oblongues étant traversées par un tronçon d'axe d'articulation intermédiaire.

Toujours dans la même idée inventive, l'invention concerne encore un tapis de convoyage plan prévu apte à emprunter des trajectoires courbes et composé d'une pluralité de maillons comportant, disposée en quinconce, à l'avant et à l'arrière d'une âme centrale, une succession de créneaux comportant, chacun, une ouverture pour le passage d'un axe d'articulation transversale assurant la liaison entre deux maillons successifs, au moins les ouvertures des créneaux à l'avant ou ceux à l'arrière étant définies de forme oblongue de manière à assurer un jeu dans une direction longitudinale d'un maillon par rapport à un autre adjacent, caractérisé par le fait qu'au moins du côté externe à la trajectoire courbe destinée à être empruntée par le tapis de convoyage, au moins certains des maillons comportent, dans leur prolongement transversal, un module de maillon comportant, disposé en quinconce à l'avant et à l'arrière d'une âme centrale, des créneaux pourvus d'une ouverture ajustée à la section cylindrique de l'axe d'articulation qui les traverse, l'âme de ces modules de maillon étant définie par deux réglettes juxtaposées dont la réglette avant porte les créneaux arrière et la réglette arrière les créneaux avant, ces réglettes adoptant une disposition symétrique par rapport au plan médian transversal d'un maillon et étant définies de forme convexe en regard l'une de l'autre avec un rayon de courbure important, supérieur à un mètre.

Il ressort de la conception selon l'invention qu'au moins sur la partie externe d'une trajectoire courbe empruntée par le tapis de convoyage, la retransmission de la force de traction s'exerce d'un maillon sur l'autre au travers des modules de maillons les prolongeant à l'extérieur d'un virage, lesquels modules comportent plusieurs créneaux parfaitement en prise avec les axes d'articulation, voire un tronçon d'axe d'articulation intermédiaire.

En somme, la conception de ces modules de maillon d'extrémité et la surface contact curviligne qu'ils procurent dans chacun de leurs modes de réalisation, permet une retransmission de cette force de traction d'un maillon sur l'autre en prenant en compte plusieurs de leurs créneaux avant et arrière et non un seul comme cela fût le cas dans les situations antérieurement connues.

La présente invention sera mieux comprise à la lecture de la description qui va suivre et des dessins joints en annexe se rapportant à un mode de réalisation.
La figure 1 représente, de manière schématisée, une vue de dessus d'une portion de tapis de convoyage conforme à l'invention.
La figure 2 est une représentation schématisée, partielle et en plan du tapis de convoyage.
La figure 3 illustre de manière schématisée, en perspective et partielle, des maillons d'un tapis de convoyage se terminant par un module de maillon conforme à l'invention, selon un premier mode de réalisation.
La figure 4 illustre de manière schématisée en plan et en coupe d'un module de maillon correspondant au mode de réalisation de la figure 3.
La figure 5 est une vue en en élévation du module de maillon de la figure 4.
La figure 6 illustre de manière schématisée, en perspective et partielle, des maillons d'un tapis de convoyage se terminant par un module de maillon conforme à l'invention, selon un second mode de réalisation.
La figure 7 illustre de manière schématisée en plan et en coupe d'un module de maillon correspondant au mode de réalisation de la figure 6.
La figure 8 est une vue en élévation du module de maillon de la figure 7.
La figure 9 illustre de manière schématisée, en perspective et partielle, des maillons d'un tapis de convoyage se terminant par un module de maillon conforme à l'invention, selon un troisième mode de réalisation.
La figure 10 est une représentation schématisée d'un module de maillon, correspondant au mode de réalisation de la figure 9, en phase d'assemblage des deux parties élémentaires qui le compose.
La figure 11 est une vue schématisée de dessus de ce module de maillon illustré dans la figure 10.
La figure 12 est une représentation en perspective, vue de dessous du module de maillon de la figure 10.

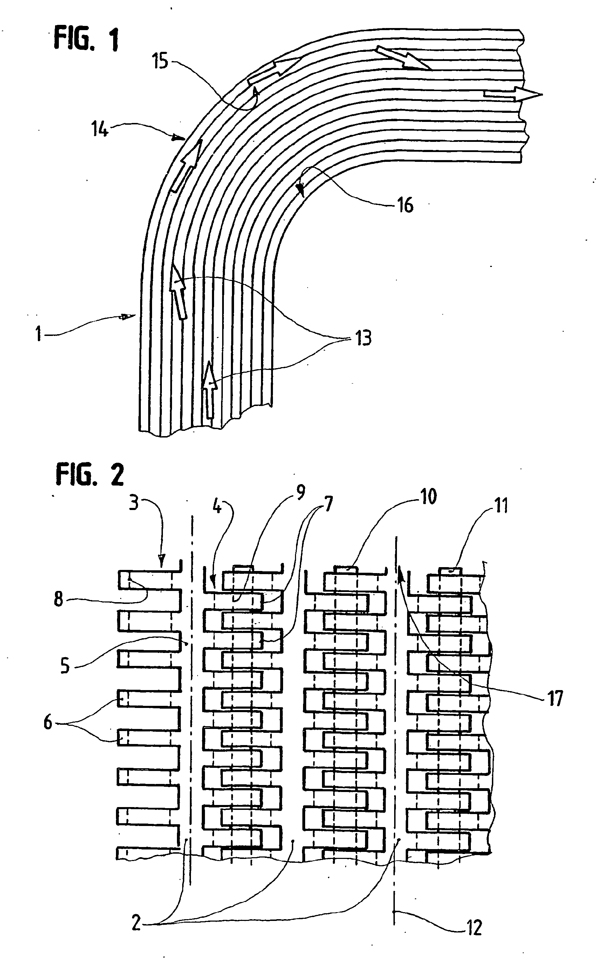

Comme représenté de manière schématisée dans la figure 1, la présente invention a trait à un tapis de convoyage 1 plan prévu apte à emprunter des trajectoires courbes par déformation dans un plan horizontal.

Tel que visible dans la figure 2, ce tapis 1 est composé d'une pluralité de maillons 2 articulés les uns par rapport aux autres, chacun de ces maillons 2 comportant, disposé en quinconce à l'avant 3 et à l'arrière 4 d'une âme centrale 5, une succession de créneaux 6, 7 comportant, chacun, une ouverture 8, 9 pour le passage d'un axe d'articulation transversal 10, 11 assurant la liaison entre deux maillons 2 successifs. Les ouvertures 8, 9 des créneaux 6 en partie avant 3 et/ou des créneaux 7 en partie arrière 4 sont définis de forme oblongue dans une direction perpendiculaire au plan médian 12 d'un maillon 2 de manière à assurer un jeu d'un maillon 2 par rapport à un autre adjacent, longitudinalement au tapis 1.

Si l'on prend en compte que sur une ligne de convoyage les forces de traction s'exercent sur le tapis 1 comme représenté par les flèches 13 que l'on voit sur la figure 1, soit, en virage, à l'extérieur 14 de ce dernier, l'on a pensé renforcer au moins le côté latéral 15 correspondant de ce tapis de convoyage 1.

En effet, dans la mesure où sur 90% des lignes de convoyage, seuls des virages dans une seule direction, soit à droite, soit à gauche, sont empruntés par un tapis 1, il peut être inutile de renforcer celui-ci sur chacun de ses côtés latéraux 15.

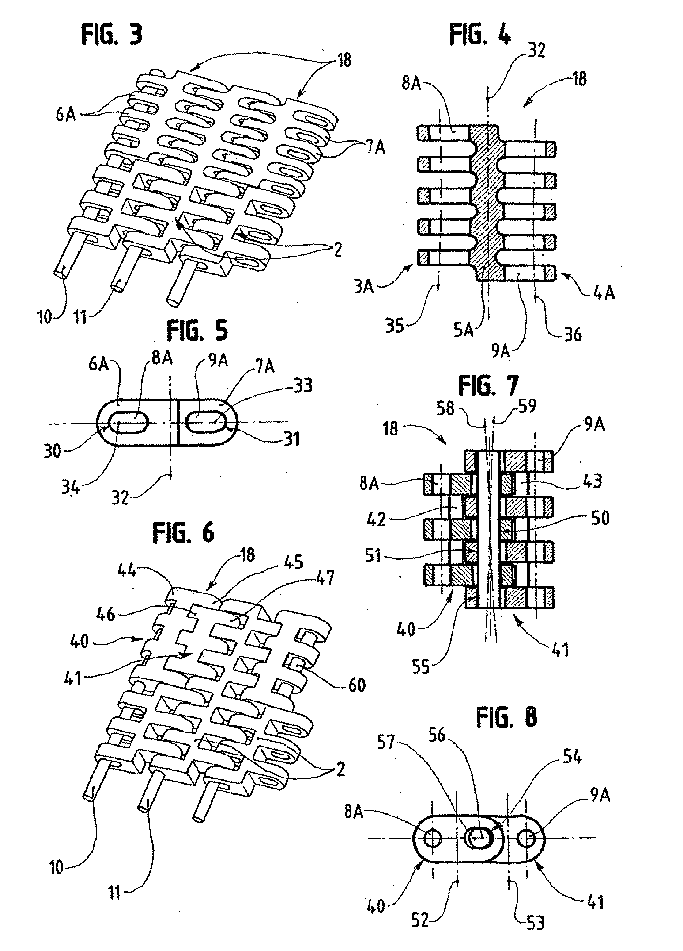

En fin de compte, ce renforcement consiste à adjoindre, dans le prolongement transversal d'au moins certains de ces maillons 2, donc à l'une et/ou l'autre extrémité 17 de ces derniers, un module de maillon de renfort 18, représenté sous différentes formes de réalisation dans les figures 3 à 12.

Ces modules de maillon 18 peuvent être indépendants ou faire partie intégrante aux maillons 2. Ils comportant, là encore, à l'avant 3A et à l'arrière 4A, disposés en quinconce, des créneaux 6A, 7A, dont le nombre peut être variable et qui sont traversés d'ouvertures 8A, 9A pour le passage des axes d'articulation 10, 11.

A ce propos et selon un premier mode de réalisation visible dans les figures 3, 4 et 5, lesdites ouvertures 8A, 9A sont définies de forme oblongue et se terminent au moins du côté extérieur 30, 31 le plus éloigné du plan médian 32 du module de maillon 18, par un secteur semi-circulaire 33 dont le centre 34 se situe sur un axe 35, 36 de forme convexe d'un rayon de courbure important, supérieur à un mètre, vue par rapport audit plan médian 32.

Selon un second mode de réalisation illustré dans les figures 6, 7 et 8, un module de maillon 18 est composé d'au moins deux maillons intermédiaires 40 ; 41 comportant, disposé en quinconce à l'avant et à l'arrière d'une âme centrale 42 ; 43, des créneaux 44, 45 ; 46, 47. Ceux à l'avant 44, respectivement à l'arrière 47, du maillon intermédiaire avant 40, respectivement arrière 41, sont pourvus d'une ouverture 8A, 9A ajustée à la section cylindrique de l'axe d'articulation 10, 11 qui les traverse. Tandis que les créneaux à l'arrière 45, respectivement à l'avant 46, du maillon intermédiaire avant 40, respectivement arrière 41, sont pourvus d'une ouverture oblongue 48 ;49 se terminant au moins du côté extérieur 50 ; 51 le plus éloigné du plan médian 52 ; 53 du maillon intermédiaire 40 ; 41 correspondant, par un secteur semi-circulaire 54 ; 55 dont le centre 56 ; 57 se situe sur un axe 58 ; 59 de forme convexe d'un rayon de courbure important, supérieur à un mètre, vue par rapport audit plan médian, respectivement 52 ; 53. Ces ouvertures oblongues sont traversées par un tronçon d'axe d'articulation intermédiaire 60.

Finalement, selon un troisième mode de réalisation, lesdites ouvertures 8A, 9A des créneaux avant 6A et arrière 7A du module de maillon 18 sont, dans ce cas, ajustées à la section des axes 10, 11 reliant les maillon 2. En somme, ces créneaux 6A, 7A sont montés exclusivement pivotant sur ces axes. Par ailleurs et selon l'invention, ce module de maillon 18 comporte une âme centrale 5A définie par deux réglettes 19, 20, juxtaposées dont la réglette avant 19 porte les créneaux arrière 7A, la réglette arrière 20 portant les créneaux avant 6A.

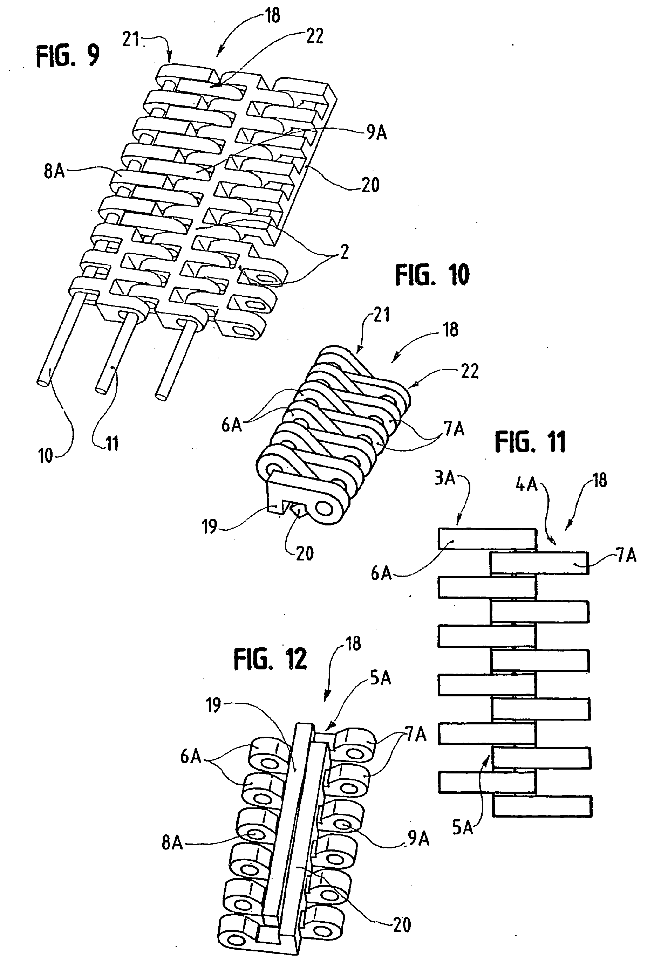

En somme, ce module de maillon 18 est composé de deux parties élémentaires 21, 22 destinées à être emboîtées l'une dans l'autre dans les conditions illustrées dans la figure 10.

Plus particulièrement, les créneaux avant 6A sont introduits depuis le dessous entre les créneaux arrière 7A pour être repoussés en partie avant 3A de sorte que la réglette 20 portant ces créneaux avant 6A vient se juxtaposer à l'arrière de la réglette 19 portant les créneaux arrière 7A.

La longueur des créneaux 6A, 7A est ainsi définie pour conférer à ses parties élémentaires 21, 22, d'un module de maillon 18 une mobilité relative dans une direction perpendiculaire à son plan médian longitudinal, soit dans la direction longitudinale du tapis de convoyage 1.

Par ailleurs, ces réglettes 19, 20 sont conçues, en regard l'une de l'autre, de forme convexe d'un grand rayon de courbure, supérieur à un mètre, de préférence de l'ordre de trois mètres. Ainsi, comme visible dans la figure 11, une fois les deux parties élémentaires 21, 22 écartées au maximum, correspondant à une situation de trajectoire courbe empruntée par le tapis de convoyage 1, les réglettes 19, 20 s'appuient l'une sur l'autre par leur côté de forme convexe selon une zone s'étendant sur une longueur correspondant à plusieurs de leurs créneaux 6A, 7A pour favoriser la répartition de la charge de traction exercée sur ledit tapis de convoyage 1.

Cela résulte, d'une part, de l'importance du rayon de courbure de leur côté convexe et, d'autre part, de leur déformation élastique sous l'effet de cette force de traction exercée sur le tapis de convoyage 1.

En fait, c'est ce même principe qui est mis en application dans chacun des modes de réalisation décrits ci-dessus, puisque à chaque fois il est recherché une zone de contact curviligne s'étant sur plusieurs créneaux, lorsque le tapis vient à emprunter une trajectoire courbe

On remarquera, à ce propos, que cette meilleure répartition de la charge de traction sur un maillon permet de concevoir ces modules de maillon de renforcement 18 en matière synthétique, tout comme les maillons 2 eux même.

En somme, la présente invention permet de répondre, de manière avantageuse, au problème posé, puisque le gain obtenu ne se résume pas, simplement, à une tenue mécanique accrue du tapis de convoyage 1. En effet, celui-ci peut, enfin, emprunter sans autre difficulté des courbures supérieures à 90°, courbures ayant nécessité, jusqu'à présent l'emploi de deux tapis de convoyage distincts avec des moyens d'entraînement propres pour chacun d'entre eux.

Une nouvelle fois il est précisé que les modules de maillon n'équipent pas nécessairement chaque maillon du tapis, qu'ils peuvent avoir des longueurs différentes, en particulier pour créer une imbrication évitant qu'ils ne s'échappent des maillons principaux notamment lorsqu'ils ne font pas partie intégrante de ces derniers.

## Revendications

1. Tapis de convoyage plan prévu apte à emprunter des trajectoires courbes et composé d'une pluralité de maillons (2) comportant, disposée en quinconce à l'avant (3) et à l'arrière (4) d'une âme centrale (5), une succession de créneaux (6, 7) comportant, chacun, une ouverture (8, 9) pour le passage d'un axe d'articulation (10, 11) assurant la liaison entre deux maillons (2) successifs, au moins les ouvertures (8, 9) des créneaux (6) à l'avant (3) ou ceux (7) à l'arrière (4) étant définis de forme oblongue de manière à assurer un jeu dans une direction longitudinale d'un maillon (2) par rapport à un autre adjacent, **caractérisé par le fait qu'**au moins du côté externe (14) à la trajectoire courbe destinée à être empruntée par le tapis de convoyage (1), au moins certains des maillons (2) comportent, dans leur prolongement transversal, un module de maillon (18) comportant, disposé en quinconce à l'avant (3A) et à l'arrière (4A) d'une âme centrale (5A), des créneaux (6A, 7A) pourvus d'une ouverture oblongue (8A, 9A) se terminant, au moins du côté extérieur (30, 31) le plus éloigné du plan médian (32) du module de maillon (18), par un secteur semi-circulaire (33) dont le centre 34 se situe sur un axe 35, 36 de forme convexe d'un rayon de courbure important, supérieur à un mètre, vue par rapport audit plan médian 32.

2. Tapis de convoyage plan prévu apte à emprunter des trajectoires courbes et composé d'une pluralité de maillons (2) comportant, disposée en quinconce à l'avant (3) et à l'arrière (4) d'une âme centrale (5), une succession de créneaux (6, 7) comportant, chacun, une ouverture (8, 9) pour le passage d'un axe d'articulation (10, 11) assurant la liaison entre deux maillons (2) successifs, au moins les ouvertures (8, 9) des créneaux (6) à l'avant (3) ou ceux (7) à l'arrière (4) étant définis de forme oblongue de manière à assurer un jeu dans une direction longitudinale d'un maillon (2) par rapport à un autre adjacent, **caractérisé par le fait qu'**au moins du côté externe (14) à la trajectoire courbe destinée à être empruntée par le tapis de convoyage (1), au moins certains des maillons (2) comportent, dans leur prolongement transversal, un module de maillon (18), composé d'au moins deux maillons intermédiaires (40 ; 41) comportant, disposé en quinconce à l'avant et à l'arrière d'une âme centrale (42 ; 43), des créneaux (44, 45 ; 46, 47), ceux à l'avant (44), respectivement à l'arrière (47), du maillon intermédiaire avant (40), respectivement arrière (41), étant pourvus d'une ouverture (8A, 9A) ajustée à la section cylindrique de l'axe d'articulation (10, 11) qui les traverse, tandis que les créneaux à l'arrière (45), respectivement à l'avant (46), du maillon intermédiaire avant (40), respectivement arrière (41), étant pourvus d'une ouverture oblongue (48 ;49) se terminant, au moins du côté extérieur (50 ; 51) le plus éloigné du plan médian (52; 53) du maillon intermédiaire (40 ; 41) correspondant, par un secteur semi-circulaire (54 ; 55) dont le centre (56 ; 57) se situe sur un axe (58 ; 59) de forme convexe d'un rayon de courbure important, supérieur à un mètre, vue par rapport audit plan médian, respectivement (52 ; 53), ces ouvertures oblongues (48 ;49) étant traversées par un tronçon d'axe d'articulation intermédiaire (60).

3. Tapis de convoyage plan prévu apte à emprunter des trajectoires courbes et composé d'une pluralité de maillons (2) comportant, disposée en quinconce à l'avant (3) et à l'arrière (4) d'une âme centrale (5), une succession de créneaux (6, 7) comportant, chacun, une ouverture (8, 9) pour le passage d'un axe d'articulation (10, 11) assurant la liaison entre deux maillons (2) successifs, au moins les ouvertures (8, 9) des créneaux (6) à l'avant (3) ou ceux (7) à l'arrière (4) étant définis de forme oblongue de manière à assurer un jeu dans une direction longitudinale d'un maillon (2) par rapport à un autre adjacent, **caractérisé par le fait qu'**au moins du côté externe (14) à la trajectoire courbe destinée à être empruntée par le tapis de convoyage (1), au moins certains des maillons (2) comportent, dans leur prolongement transversal, un module de maillon (18) comportant, disposé en quinconce à l'avant (3A) et à l'arrière (4A) d'une âme centrale (5A), des créneaux (6A, 7A) pourvus d'une ouverture (8A, 9A) ajustée à la section cylindrique de l'axe d'articulation (10, 11) qui les traverse, l'âme (5A) de ces modules de maillons (18) étant définie par deux réglettes (19, 20) juxtaposées, dont la réglette avant (19) porte les créneaux arrière (7A) et la réglette arrière (20) les créneaux avant (6A), ces réglettes (19, 20) adoptant une disposition symétrique par rapport au plan médian transversal d'un maillon (2) et étant définie par deux réglettes (19, 20) juxtaposées dont la réglette avant (19) porte les créneaux arrière (7A) et la réglette arrière (20) des créneaux avant (6A), ces réglettes (19, 20) adoptant une disposition symétrique par rapport au plan médian transversal d'un maillon (2) et étant défini de forme convexe en regard l'une de l'autre avec un rayon de courbure important, supérieur à un mètre.

4. Tapis de convoyage selon la revendication 3, **caractérisé par le fait que** le module de maillon (18) est composé de deux parties élémentaires (21, 22) destinées à être emboîtées l'une dans l'autre.

5. Tapis de convoyage selon la revendication 3 ou 4, **caractérisé par le fait que** la longueur des créneaux (6A, 7A) d'un module de maillon (18) est ainsi définie pour conférer aux parties élémentaires (21, 22) qui le compose une mobilité relative dans une direction perpendiculaire à son plan médian longitudinal, soit dans la direction longitudinale du tapis de convoyage (1).

6. Tapis de convoyage selon l'une quelconque des revendications précédentes, **caractérisé par le fait que** le rayon de courbure des côtés de formes convexes des réglettes (19, 20) ou des axes (34, 35 ; 58, 59) est choisi de l'ordre de 3 mètres.

7. Tapis de convoyage selon l'une quelconque des revendications précédentes, **caractérisé par le fait qu'**un module de maillon de renfort (18) est conçu en matière plastique.

## Claims

1. Flat conveyor belt designed capable of adopting curved paths and comprised of a plurality of links (2) including, arranged staggered at the front (3) and the rear (4) of a central core (5), a succession of crenels (6, 7) each including an opening (8, 9) for the passing through of a link pin (10, 11) ensuring the connection between two successive links (2), at least the openings (8, 9) of the crenels (6) at the front (3) or those (7) at the rear (4) being defined with an elongated shape so as to ensure a backlash in a longitudinal direction of one link (2) with respect to an adjacent one, wherein, at least on the side (14) external to the curved path to be adopted by the conveyor belt (1), at least some of the links (2) include, in their transverse extension, a link module (18) including, arranged staggered at the front (3A) and the rear (4A) of a central core (5A), crenels (6A, 7A) provided with an elongated opening (8A, 9A) ending, at least on the outer side (30, 31) furthest away from the median plane (32) of the link module (18), by a semicircular sector (33) the centre (34) of which is located on an axis (35, 36) of a convex shape and a large radius of curvature, larger than one meter, seen with respect to said median plane 32.

2. Flat conveyor belt designed capable of adopting curved paths and comprised of a plurality of links (2) including, arranged staggered at the front (3) and the rear (4) of a central core (5), a succession of crenels (6, 7) each including an opening (8, 9) for the passing through of a link pin (10, 11) ensuring the connection between two successive links (2), at least the openings (8, 9) of the crenels (6) at the front (3) or those (7) at the rear (4) being defined with an elongated shape so as to ensure a backlash in a longitudinal direction of one link (2) with respect to an adjacent one, wherein, at least on the side (14) external to the curved path to be adopted by the conveyor belt (1), at least some of the links (2) include, in their transverse extension, a link module (18) comprised of at least two intermediate links (40 ; 41) including, arranged staggered at the front and at the rear of a central core (42 ; 43), crenels (44, 45 ; 46, 47), those at the front (44), respectively at the rear (47), of the intermediate front link (40), respectively rear link (41), being provided with an opening (8A, 9A) adjusted to the cylindrical cross-section of the link pin (10, 11) passing through them, while the crenels at the rear (45), respectively at the front (46), of the intermediate front link (40), respectively rear link (41), are provided with an elongated opening (48 ; 49) ending, at least on the outer side (50 ; 51) furthest away from the median plane (52 ; 53) of the corresponding intermediate link (40 ; 41), with a semicircular sector (54 ; 55) the centre (55 ; 57) of which is located on an axis (58 ; 59) with a convex shape and an important radius of curvature, larger than one meter, seen with respect to said median plane, respectively (52 ; 53), through these elongated openings (48 ; 49) passing a length of intermediate link pin (60).

3. Flat conveyor belt designed capable of adopting curved paths and comprised of a plurality of links (2) including, arranged staggered at the front (3) and the rear (4) of a central core (5), a succession of crenels (6, 7) each including an opening (8, 9) for the passing through of a link pin (10, 11) ensuring the connection between two successive links (2), at least the openings (8, 9) of the crenels (6) at the front (3) or those (7) at the rear (4) being defined with an elongated shape so as to ensure a backlash in a longitudinal direction of one link (2) with respect to an adjacent one, wherein, at least on the side (14) external to the curved path to be adopted by the conveyor belt (1), at least some of the links (2) include, in their transverse extension, a link module (18) including, arranged staggered at the front (3A) and at the rear (4A) of a central core (5A), crenels (6A, 7A) provided with an opening (8A, 9A) adjusted to the cylindrical cross-section of the link pin (10, 11) passing through them, the core (5A) of these link modules (18) being defined by two juxtaposed rods (19, 20), the front rod (19) of which bears the rear crenels (7A) and the rear rod (20) bears the front crenels (6A), these rods (19, 20) adopting a symmetrical arrangement with respect to the transverse median plane of a link (2) and being defined by two juxtaposed rods (19, 20) the front rod (19) bears the rear crenels (7A) and the rear rod (20) rear crenels (6A), these rods (19, 20) adopting a symmetrical arrangement with respect to the transverse median plane of a link (2) and being defined with a convex shape in front of each other and with an important radius of curvature, larger than one meter.

4. Conveyor belt according to claim 3, wherein the link module (18) is comprised of two elementary portions (21, 22) aimed at being encased into each other.

5. Conveyor belt according to claim 3 or 4, wherein the length of the crenels (6A, 7A) of a link module (18) is defined so as to impart to the elementary portions (21, 22) it is comprised of a relative mobility in a direction perpendicular to its longitudinal median plane, i.e. in the longitudinal direction of the conveyor belt (1).

6. Conveyor belt according to any of the preceding claims, wherein the radius of curvature of the convex-shaped sides of the rods (19, 20) or of the axes (34, 35 ; 58, 59) is chosen in the range of 3 meters.

7. Conveyor belt according to any of the preceding claims, wherein a reinforcing link module (16) is made out of plastic.

## Patentansprüche

1. Flache Fördermatte, geeignet vorgesehen, um geneigte Umlaufbahnen zu befahren, und bestehend aus einer Vielzahl von Bindegliedern (2), umfassend in versetzter Anordnung auf der Vorder- (3) und Rückseite (4) eines Kerns (5) eine Reihenfolge von Zinnen (6, 7), umfassend jeweils eine Öffnung (8, 9) für den Durchgang eines Gelenkstiftes (10, 11), sichernd die Verbindung zwischen zwei aufeinanderfolgenden Bindegliedern (2), wobei wenigstens die Öffnungen (8, 9) der Zinnen (6) auf der Vorderseite (3) oder derjenigen (7) auf der Rückseite (4) mit länglicher Form gebildet seien, derart, um in einer Längsrichtung ein Spiel eines Bindeglieds (2) hinsichtlich eines anderen benachbarten zu sichern, **dadurch gekennzeichnet, dass** wenigstens auf der äußerlichen Seite (14) der geneigten Umlaufbahn, vorgesehen, um von der Fördermatte (1) befahren zu werden, wenigstens einige von den Bindegliedern (2) in ihrer Querverlängerung ein Gliedelement (18) beinhalten, umfassend in versetzter Anordnung auf der Vorder- (3A) und Rückseite (4A) eines Kerns (5A) Zinnen (6A, 7A), ausgestattet mit einer länglichen Öffnung (8A, 9A), endend wenigstens auf der Außenseite (30, 31), die von der Mittelebene (32) des Gliedelements (18) am weitesten entfernt ist, mit einem halbrunden Bereich (33), dessen Mitte (34) auf einer Achse (35, 36) mit konvexer Form mit einem über einen Meter großen Krümmungsradius, gegenüber der besagten Mittelebene 32 gesehen, liegt.

2. Flache Fördermatte, geeignet vorgesehen, um geneigte Umlaufbahnen zu befahren, und bestehend aus einer Vielzahl von Bindegliedern (2), umfassend in versetzter Anordnung auf der Vorder- (3) und Rückseite (4) eines Kerns (5) eine Reihenfolge von Zinnen (6, 7), umfassend jeweils eine Öffnung (8, 9) für den Durchgang eines Gelenkstiftes (10, 11), sichernd die Verbindung zwischen zwei aufeinanderfolgenden Bindegliedern (2), wobei wenigstens die Öffnungen (8, 9) der Zinnen (6) auf der Vorderseite (3) oder derjenigen (7) auf der Rückseite (4) mit länglicher Form gebildet seien, derart, um in einer Längsrichtung ein Spiel eines Bindegliedes (2) hinsichtlich eines anderen benachbarten zu sichern, **dadurch gekennzeichnet, dass** wenigstens auf der äußerlichen Seite (14) der geneigten Umlaufbahn, vorgesehen, um von der Fördermatte (1) befahren zu werden, wenigstens einige von den Bindegliedern (2) in ihrer Querverlängerung ein Gliedelement (18) beinhalten, das aus wenigstens zwei Zwischengliedern (40 ; 41) besteht, umfassend in versetzter Anordnung auf der Vorder- und Rückseite eines Kerns (42; 43) Zinnen (44, 45, 46, 47), wobei diejenige auf der Vorderseite (44), beziehungsweise auf der Rückseite (47) des vorderen Zwischengliedes (40), beziehungsweise des hinteren Zwischengliedes (41) mit einer Öffnung (8A, 9A) ausgestattet seien, angepasst an den zylindrischen Querschnitt des Gelenkstiftes (10, 11), der sie durchquert, während die Zinnen auf der Rückseite (45), beziehungsweise auf der Vorderseite (46) des vorderen Zwischengliedes (40), beziehungsweise des hinteren Zwischengliedes (41) mit einer länglichen Öffnung (48; 49) ausgestattet seien, endend wenigstens auf der Außenseite (50 ; 51), die von der Mittelebene (52 ; 53) des entsprechenden Zwischengliedes (40 ; 41) am meisten entfernt ist, mit einem halbrunden Bereich (54 ; 55), dessen Mitte (56 ; 57) auf einer Achse (58; 59) mit konvexer Form mit einem über einen Meter großen Krümmungsradius, gegenüber der besagten Mittelebene gesehen, beziehungsweise (52 ; 53), liegt, wobei diese länglichen Öffnungen (48; 49) von einem Teilstück des Zwischengelenkstiftes (60) durchquert seien.

3. Flache Fördermatte, geeignet vorgesehen, um geneigte Umlaufbahnen zu befahren, und bestehend aus einer Vielzahl von Bindegliedern (2), umfassend in versetzter Anordnung auf der Vorder- (3) und Rückseite (4) eines Kerns (5) eine Reihenfolge von Zinnen (6, 7), umfassend jeweils eine Öffnung (8, 9) für den Durchgang eines Gelenkstiftes (10, 11), sichernd die Verbindung zwischen zwei aufeinanderfolgenden Bindegliedern (2), wobei wenigstens die Öffnungen (8, 9) der Zinnen (6) auf der Vorderseite (3) oder derjenigen (7) auf der Rückseite (4) mit länglicher Form gebildet seien, derart, um in einer Längsrichtung ein Spiel eines Bindegliedes (2) hinsichtlich eines anderen benachbarten zu sichern, **dadurch gekennzeichnet, dass** wenigstens auf der äußerlichen Seite (14) der geneigten Umlaufbahn, vorgesehen, um von der Fördermatte (1) befahren zu werden, wenigstens einige von den Bindegliedern (2) in ihrer Querverlängerung ein Gliedelement (18) beinhalten, umfassend in versetzter Anordnung auf der Vorder- (3A) und Rückseite (4A) eines Kerns (5A) Zinnen (6A, 7A), ausgestattet mit einer Öffnung (8A, 9A), angepasst an den zylindrischen Querschnitt des Gelenkstiftes (10, 11), der sie durchquert, wobei der Kern (5A) dieser Gliedelemente (18) durch zwei nebeneinanderliegende Leisten (19, 20) gebildet sei, von denen die vordere Leiste (19) die hinteren Zinnen (7A) trägt und die hintere Leiste (20) die vorderen Zinnen (6A) trägt, wobei diese Leisten (19, 20) eine symmetrische Anordnung hinsichtlich der queren Mittelebene eines Bindegliedes (2) annehmen und durch zwei nebeneinanderliegende Leisten (19, 20) gebildet seien, von denen die vordere Leiste (19) die hinteren Zinnen (7A) trägt und die hintere Leiste (20) die vorderen Zinnen (6A) trägt, wobei diese Leisten (19, 20) eine symmetrische Anordnung hinsichtlich der queren Mittelebene eines Bindegliedes (2) annehmen und gegenüberliegend mit konvexer Form mit einem über einen Meter großen Krümmungsradius gebildet seien.

4. Fördermatte nach Anspruch 3, **dadurch gekennzeichnet, dass** das Gliedelement (18) aus zwei Elementarteilen (21, 22) gebildet ist, die vorgesehen sind, um ineinander eingeschachtelt zu werden.

5. Fördermatte nach Anspruch 3 oder 4, **dadurch gekennzeichnet, dass** die Länge der Zinnen (6A, 7A) eines Gliedelements (18) solcherweise gebildet ist, um den Elementarteilen (21, 22), die es zusammensetzen, eine relative Beweglichkeit in einer Richtung senkrecht zu seiner Längsmittelebene oder in der Längsrichtung der Fördermatte (1) zu verleihen.

6. Fördermatte nach irgendeinem der vorgehenden Ansprüche, **dadurch gekennzeichnet, dass** der Krümmungsradius der Seiten mit konvexen Formen der Leisten (19, 20) oder der Achsen (34, 35; 58 59) in der Größenordnung von 3 Metern gewählt ist.

7. Fördermatte nach irgendeinem der vorgehenden Ansprüche, **dadurch gekennzeichnet, dass** ein Verstärkungsgliedermodul (18) aus Kunststoff vorgesehen ist.
